# EUROPÄISCHE PATENTSCHRIFT

(11) **EP 0 766 062 B1**
(45) Veröffentlichungstag und Bekanntmachung des Hinweises auf die Patenterteilung: **20.02.2002**
(21) Anmeldenummer: 96106813.7
(22) Anmeldetag: 30.04.1996
(51) Int. Cl.: G01D 5/38, G01B 11/00

(54) **Optische Vorrichtung zum Messen eines Wegs oder Drehwinkels**
Optical device for measuring distance or rotational angle
Dispositif optique pour la mesure du déplacement ou d'un angle de rotation

(30) Priorität: 28.09.1995 DE 19536066
(43) Veröffentlichungstag der Anmeldung: 02.04.1997
(73) Patentinhaber: ROBERT BOSCH GMBH, 70442 Stuttgart (DE)
(72) Erfinder: Drabarek, Pawel, Ing., 75233 Tiefenbronn-Mühlhausen (DE); Schilling, Ulrich, Dipl.-Ing., 70567 Stuttgart (DE)

(56) Entgegenhaltungen:
- EP-A- 0 248 277
- DE-A- 4 317 064
- DE-A- 4 318 129
- PATENT ABSTRACTS OF JAPAN vol. 95, no. 10, 30.November 1995 & JP 07 190809 A (SHARP CORP.)

## Beschreibung

### Stand der Technik

Die Erfindung bezieht sich auf eine optische Vorrichtung zum Messen eines Wegs oder Drehwinkels eines Objekts, bei der in einer optischen Strecke zum Erzeugen gebeugter Strahlung aus einer Eingangsstrahlung mindestens eine erste Hologrammstruktur und nachfolgend ein Meßgitter angeordnet sind, dessen gebeugte Strahlung mittels einer Sensoreinrichtung erfaßt und zum Bereitstellen eines Meßergebnisses in Form elektrischer Signale zu einer Auswerte-Anordnung weitergegeben wird.

Eine Vorrichtung dieser Art ist in der DE 43 18 129 A1 beschrieben. Bei dieser bekannten Vorrichtung wird eine Eingangsstrahlung über einen Strahlteiler in mehrere Teilstrahlen aufgeteilt, die auf zwei Teile eines Referenzgitters gerichtet werden, wobei auf jedes Teilgitter zwei Meßstrahlungen fallen. Die von den Teilgittern gebeugten Strahlungen werden auf einen gemeinsamen Fleck eines nachgeschalteten Meßgitters gerichtet und dort abermals gebeugt, so daß eine interferierende Strahlung entsteht, die mittels einer Sensoreinrichtung erfaßt und in einer Auswerte-Anordnung zum Bereitstellen eines Meßergebnisses weiterverarbeitet wird.

Das Meßergebnis besteht beispielsweise in einer relativen Positionsänderung zwischen einem das Referenzgitter tragenden ersten Teil und einem das Meßgitter tragenden zweiten Teil bzw. aus einer aus der Positionsänderung abgeleiteten physikalischen Größe. Für die Strahlaufteilung sind mehrere Ablenkelemente erforderlich, die justiert werden müssen, wodurch sich ein entsprechender Aufwand ergibt. Ein weiterer Aufwand ergibt sich bei der Signalerfassung mittels der Sensoreinrichtung, da die Ermittlung der für die Auswertung benötigten Phasenbeziehungen der interferierten Strahlung aus der Wellenfront mit Schwierigkeiten verbunden ist.

### Vorteile der Erfindung

Der Erfindung liegt die Aufgabe zugrunde, eine optische Vorrichtung der eingangs genannten Art bereitzustellen, bei der der Aufbau und die Justierung einfach ist und eine zuverlässig auswertbare interferierte Strahlung erhalten wird.

Diese Aufgabe wird mit den im Patentanspruch 1 angegebenen Merkmalen gelöst. Hiernach ist also vorgesehen, daß die Hologrammstruktur zum Aufteilen der Eingangsstrahlung in mindestens zwei Teilstrahlen mindestens zwei Teilbereiche aufweist, daß die Teilbereiche computerhergestellte Hologramme sind, daß die Teilbereiche derart ausgebildet sind, daß eine Vorkorrektur der Wellenfronten in der Weise erfolgt, daß die an dem Meßgitter gebeugten Strahlungen zu einem homogenen Interferenzfeld interferieren, und daß mit den Hologrammen ein Phasenunterschied in den Teilstrahlen vorgegeben ist.

Mit diesen Maßnahmen wird zum einen die Aufteilung der Eingangsstrahlung, die beispielsweise von einer Laserdiode mit elliptischem Querschnitt der Strahlungsintensität abgegeben, wird auf einfache Weise erhalten, und zum anderen wird ohne zusätzliche Elemente eine einfach auswertbare Wellenfront der interferierten Strahlung erzielt, die eine exakte Auswertung zum Ermitteln des Wegs oder Drehwinkels des Objektes bzw. einer daraus abgeleiteten physikalischen Größe zuläßt. Insgesamt ergibt sich dadurch ein einfacher Aufbau mit minimalem Justieraufwand.

Eine vorteilhafte Ausführungsform besteht darin, daß die Hologramme die Eingangsstrahlung bezüglich der entsprechenden inversen Beugungsordnungen in Transmission (symmetrisch) auf einen gemeinsamen Fleck des Maßgitters beugen und daß die von dem Meßgitter gebeugte und interferierte Meßstrahlung in eine gemeinsame Empfangsstrahlung ausgerichtet ist, die von einem Strahlungsempfänger aufgenommen und zum Ermitteln des Wegs oder des Winkels oder einer aus diesen abgeleiteten Größe als Ausgangssignal über eine Signalleitung weitergeführt ist.

Auf diese Weise ist die Hologrammstruktur zwischen der Strahlungsquelle und dem Objekt mit dem Meßgitter angeordnet.

Zum Vergrößern des Eindeutigkeitsbereichs, in dem eine absolute Wegmessung bzw. Winkelpositionsmessung möglich ist, oder zur Richtungserkennung ist die Maßnahme vorteilhaft, daß mehrere Paare von Hologrammen und mehrere zugeordnete Spuren mit Meßgittern unterschiedlicher Gitterkonstanten sowie mehrere zugeordnete Strahlungsempfänger vorgesehen sind.

Der Aufbau und die Justierung werden weiterhin dadurch vereinfacht, daß das Meßgitter die Meßstrahlung in Reflexion beugt und daß die Hologrammstruktur und die Fotodiode auf einer gemeinsamen Trägereinrichtung angeordnet sind. Hierdurch sind auch der Sensor bzw. mehrere Sensoren der Sensoreinrichtung von vorn herein eindeutig angeordnet, so daß diesbezügliche Justierarbeiten nachträglich entfallen. Außerdem erübrigen sich separate tragende Elemente für die Sensoren.

Eine Ausgestaltung der Vorrichtung ist beispielsweise derart, daß das Objekt trommelförmig ausgebildet ist und daß das Meßgitter in Umfangsrichtung auf dem Objekt angeordnet ist.

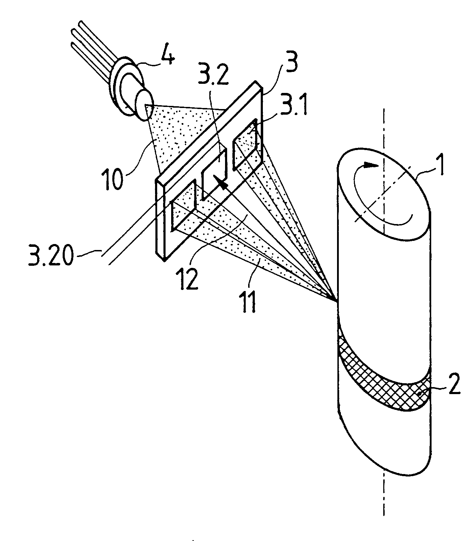

Die Erfindung wird nachfolgend anhand eines Ausführungsbeispiels unter Bezugnahme auf die Zeichnung näher erläutert.

Die Figur zeigt eine Vorrichtung zum Messen eines Drehwinkels oder einer daraus abgeleiteten Größe eines zylindrischen, trommelförmigen Objekts 1, auf dessen Umfang ein Meßgitter 2 angeordnet ist. Im Strahlengang vor dem Objekt 1 ist eine Trägereinrichtung 3 mit einer Hologrammstruktur 3.1 und einem Strahlungsempfänger 3.2 vorgesehen, die mittels einer Strahlungsquelle 4, beispielsweise einer Laserdiode bestrahlt wird. Die Hologrammstruktur 3.1 besteht aus zwei Teilbereichen, die computerhergestellte Hologramme aufweisen. Der Strahlungsempfänger 3.2, beispielsweise in Form einer Fotodiode oder einer Gruppe von Fotodioden ist in der Mitte zwischen den beiden Teilbereichen 3.1 auf der Trägereinrichtung 3 angeordnet.

Die von der Strahlungsquelle 4 abgegebene, auf die Trägereinrichtung gerichtete Strahlung wird in den beiden fensterartigen Teilbereichen der Hologrammstruktur 3.1 in zwei Meßstrahlungen 11 aufgeteilt und so gebeugt, daß die in entsprechender, inverser Beugungsordnung gebeugten Strahlungen, beispielsweise der Ordnungen +1 und -1, auf einem gemeinsamen Fleck des Meßgitters 2 auftreffen. An dem Meßgitter 2 werden die beiden Strahlungen abermals gebeugt, und zwar so, daß sie als gemeinsame, interferierte Empfangsstrahlung 12 auf den Strahlungsempfänger 3.2 gerichtet werden. Das elektrische Ausgangssignal des Strahlungsempfängers 3.2 wird über eine Signalleitung 3.20 an eine Auswerte-Anordnung zum Bereitstellen des Meßergebnisses weitergegeben.

Die Hologrammstruktur 3.1 hat neben der Funktion der Strahlaufteilung und Beugung, die vorliegend in Transmission erfolgt, weiterhin die Funktion einer Vorkorrektur der Wellenfronten der Meßstrahlung 11 in der Weise, daß die Wellenfront der Empfangsstrahlung 12 ein homogenes Interferenzfeld aufweist, so daß die durch die Positionsänderung des Meßgitters 2 hervorgerufenen Phasenänderungen und die damit verbundenen Intensitätsänderungen mit dem Strahlungsempfänger 3.2 zuverlässig erfaßt werden können. Zur computerunterstützten Fertigung der Hologramme ist es lediglich erforderlich, die speziellen Eigenschaften des Meßgitters 2 sowie gegebenenfalls weiterer verfälschender Einflußfaktoren auf die interferierte Strahlung zu berücksichtigen.

Mit den beschriebenen Maßnahmen ergibt sich ein einfacher Aufbau der optischen Vorrichtung, bei der die Hologrammstruktur mehrfache Funktionen übernimmt.

In entsprechender Weise können auch mehrere Hologrammstrukturen und Meßgitter mit unterschiedlichen, aufeinander abgestimmten Gitterkonstanten vorgesehen werden, um beispielsweise eine Drehrichtung zu erfassen oder den Eindeutigkeitsbereich für eine absolute Positionsmessung zu vergrößern, wie beispielsweise in der DE 43 17 064 A1 vorgeschlagen. Das Objekt kann auch eine von der Figur abweichende Gestalt haben, beispielsweise eine translatorisch oder rotatorisch bewegte Scheibe sein. Auch kann das eigentliche Meßobjekt über einen Übertragungsmechanismus mit dem das Meßgitter tragenden Objekt gekoppelt sein.

## Patentansprüche

1. Optische Vorrichtung zum Messen eines Wegs oder Drehwinkels eines Objekts (1), bei der in einer optischen Strecke zum Erzeugen gebeugter Strahlung aus einer Eingangsstrahlung (10) mindestens eine erste Hologrammstruktur (3.1) und nachfolgend ein Meßgitter (2) angeordnet sind, dessen gebeugte Strahlung (12) mittels einer Sensoreinrichtung (3.2) erfaßt und zum Bereitstellen eines Meßergebnisses in Form elektrischer Signale zu einer Auswerte-Anordnung weitergegeben wird,
**dadurch gekennzeichnet,**
**daß** die Hologrammstruktur (3.1) zum Aufteilen der Eingangsstrahlung (10) in mindestens zwei Teilstrahlen mindestens zwei Teilbereiche aufweist,
**daß** die Teilbereiche computerhergestellte Hologramme sind,
**daß** die Teilbereiche derart ausgebildet sind, daß eine Vorkorrektur der Wellenfronten in der Weise erfolgt, daß die an dem Meßgitter (2) gebeugten Strahlen zu einem homogenen Interferenzfeld interferieren, und
**daß** mit den Hologrammen ein Phasenunterschied in den Teilstrahlen (11) vorgegeben ist.

2. Vorrichtung nach Anspruch 1,
**dadurch gekennzeichnet,**
**daß** die Hologramme (3.1) die Eingangsstrahlung (10) bezüglich der entsprechenden inversen Beugungsanordnungen in Transmission auf einen gemeinsamen Fleck des Meßgitters (2) beugen und
**daß** die von dem Meßgitter (2) gebeugte und interferierte Meßstrahlung (11) in eine gemeinsame Empfangsstrahlung (12) ausgerichtet ist, die von einem Strahlungsempfänger (3.2) aufgenommen und zum Ermitteln des Wegs oder des Winkels oder einer aus diesen abgeleiteten Größe als Ausgangssignal über eine Signalleitung (3.20) weitergeführt ist.

3. Vorrichtung nach Anspruch 1 oder 2,
**dadurch gekennzeichnet,**
**daß** mehrere Paare von Hologrammen und mehrere zugeordnete Spuren mit Meßgittern (2) unterschiedlicher Gitterkonstanten sowie mehrere zugeordnete Strahlungsempfänger (3.2) vorgesehen sind.

4. Vorrichtung nach einem der Ansprüche 1 bis 3,
**dadurch gekennzeichnet,**
**daß** das Meßgitter (2) die Meßstrahlung (11) in Reflexion beugt und
**daß** die Hologrammstruktur (3.1) und der Strahlungsempfänger (3.2) auf einer gemeinsamen Trägereinrichtung (3) angeordnet sind.

5. Vorrichtung nach einem der Ansprüche 1 bis 4,
**dadurch gekennzeichnet,**
**daß** das Objekt trommelförmig ausgebildet ist und
**daß** das Meßgitter (2) in Umfangsrichtung auf dem Objekt (1) angeordnet ist.

## Claims

1. Optical device for measuring a position or angle of rotation of an object (1), in the case of which there are arranged in an optical path for the purpose of generating diffracted radiation from input radiation (10) at least one first hologram structure (3.1) and, downstream thereof, a measuring grid (2) whose diffracted radiation (12) is detected by means of a sensor device (3.2) and is passed on to an evaluation arrangement for the purpose of providing a measurement result in the form of electric signals, **characterized in that** the hologram structure (3.1) has at least two subregions for fitting the input radiation (10) into at least two component beams, **in that** the subregions are computer-produced holograms, **in that** the subregions are constructed in such a way that a peak erection of the wave fronts is performed in such a way that the beams diffracted at the measuring grid (2) interfere to form a homogenous interference field, and **in that** a phase difference in the component beams (11) is prescribed by the holograms.

2. Device according to Claim 1, **characterized in that** the holograms (3.1) diffract the input radiation (10) with reference to the corresponding inverse diffraction arrangements in transmission onto a common spot of the measuring grid (2), and **in that** the measuring radiation (11), which is diffracted by the measuring grid (2) and is subject to interference, is aligned to form a common receive beam (12) which is picked up by a radiation detector (3.2) and passed on as output signal via a signal line (3.20) in order to determine the position or the angle, or a variable derived from these.

3. Device according to Claim 1 or 2, **characterized in that** a plurality of pairs of holograms and a plurality of assigned tracks with measuring grids (2) of different grid constants as well as a plurality of assigned radiation detectors (3.2) are provided.

4. Device according to one of Claims 1 to 3, **characterized in that** the measuring grid (2) bends measuring radiation (11) in reflection, and **in that** the hologram structure (3.1) and the radiation detector (3.2) are arranged on a common support device (3).

5. Device according to one of Claims 1 to 4, **characterized in that** the object is of drum-shaped design, and **in that** the measuring grid (2) is arranged in the circumferential direction on the object (1).

## Revendications

1. Dispositif optique pour mesurer un déplacement ou un angle de rotation d'un objet (1) selon lequel, dans le chemin optique, pour générer un rayonnement diffracté à partir d'un rayonnement d'entrée (10), on a au moins une première structure d'hologramme (3.1) à la suite un réseau de mesure (2), le rayonnement diffracté (12) étant détecté à l'aide d'une installation de capteurs (3.2) et transmis à un dispositif d'exploitation pour fournir un résultat de mesure sous la forme de signaux électriques,
**caractérisé en ce que**
- la structure d'hologramme (3.1) présente au moins deux zones partielles pour diviser le rayonnement d'entrée (10) en au moins deux rayons partiels,
- les zones partielles sont des hologrammes fabriqués par ordinateurs,
- les zones partielles sont réalisées pour avoir une correction préalable des fronts d'ondes de façon que les rayons diffractés par le réseau de mesure (2) interférent en un champ d'interférences homogène, et
- les hologrammes prédéfinissent une différence de phase dans les rayons partiels (11).

2. Dispositif selon la revendication 1,
**caractérisé en ce que**
les hologrammes (3.1) diffractent le rayonnement d'entrée (10) suivant un ordre de diffraction inverse correspondant, dans la transmission vers une tache commune du réseau de mesure (2), et
le rayonnement de mesure (11) diffracté par le réseau de mesure (2) et ayant interféré, est aligné suivant un rayonnement de réception commun (12) reçu par un récepteur (3.2) et pour déterminer le déplacement ou l'angle ou une grandeur qui en dépend, ce rayonnement est transmis comme signal de sortie par une ligne de transmission de signaux (3.20).

3. Dispositif selon la revendication 1 ou 2,
**caractérisé en ce que**
plusieurs paires d'hologrammes et plusieurs traces correspondantes avec des réseaux de mesure (2) à constantes de réseau différentes ainsi que plusieurs récepteurs de rayonnement (3.2) associés sont prévus.

4. Dispositif selon l'une quelconque des revendications 1 à 3,
**caractérisé en ce que**
le réseau de mesure (2) diffracte le rayonnement de mesure (11) en réflexion et la structure d'hologramme (3.1) et le récepteur de rayonnement (3.2) sont prévus sur une installation de support (3) commune.

5. Dispositif selon l'une quelconque des revendications 1 à 4,
**caractérisé en ce que**
l'objet est en forme de tambour et le réseau de mesure (2) est prévu dans la direction périphérique sur l'objet (1).
